# FASCICULE DE BREVET EUROPEEN

(11) **EP 0 660 961 B1**
(45) Date de publication et mention de la délivrance du brevet: **11.06.1997**
(21) Numéro de dépôt: 93920906.0
(22) Date de dépôt: 21.09.1993
(51) Int. Cl.: G07F 7/10

(54) **DISPOSITIF POUR EFFECTUER DES TRANSACTIONS AVEC CARTES A MICROPROCESSEUR, ET PROCEDE POUR EFFECTUER UNE TRANSACTION AVEC UN TEL DISPOSITIF**
VORRICHTUNG UND VERFAHREN ZUM DURCHFÜHREN VON TRANSAKTIONEN MIT EINEM MIKROPROZESSOR UMFASSENDEN KARTEN
DEVICE FOR CONDUCTING TRANSACTIONS USING SMART CARDS AND METHOD FOR CONDUCTING A TRANSACTION WITH SAID DEVICE

(30) Priorité: 21.09.1992 FR 9211201
(43) Date de publication de la demande: 05.07.1995
(73) Titulaire: CKD S.A., F-92024 Nanterre (FR)
(72) Inventeur: BONNEMOY, Marc, F-92024 Nanterre (FR); BATAILLE, Clément Jules, F-75006 Paris (FR)
(74) Mandataire: Pernez, Helga
(86) Numéro de dépôt international: FR9300910
(87) Numéro de publication internationale: WO9407217

(56) Documents cités:
- EP-A- 0 484 198
- FR-A- 2 661 762

## Description

La présente invention a trait d'une façon générale aux dispositifs pour effectuer des transactions mettant en jeu des cartes à microprocesseurs.

De façon classique, une transaction effectuée avec une carte à microprocesseur met en jeu les étapes suivantes :
- la carte à microprocesseur est introduite dans un lecteur de carte prévu dans un appareil de transaction,
- le montant de la transaction est composé par le commerçant sur un clavier de l'appareil,
- le code confidentiel du titulaire de la carte est présenté à la carte et vérifié par celle-ci,
- dans le cas où l'identité des deux codes est avérée, et après éventuel calcul de certificat, contrôle de listes noires, etc..., la transaction est validée, un ticket de transaction est imprimé par une imprimante prévue dans l'appareil.

Un appareil de transaction conçu pour la mise en oeuvre des étapes suivantes se présente classiquement sous la forme d'un appareil de table, alimenté par le secteur.

Pour faciliter l'utilisation de tels appareils, notamment dans le domaine de la restauration, on a développé depuis quelques années des appareils pour transactions par cartes à microprocesseur qui sont portables et qui comprennent, dans un boîtier, le dispositif lecteur de carte à microprocesseur, le clavier, l'imprimante, et les moyens de calcul et de mémorisation, par exemple un microcontrôleur, nécessaires à son fonctionnement, l'ensemble étant alimenté par batteries.

Dans tous les cas de figure, la carte est mise en place dans l'appareil par une fente ouvrant sur un coupleur de carte à microprocesseur approprié. Cette fente est généralement située dans une paroi avant, arrière ou latérale du boîtier. De tels appareils portables sont par ailleurs relativement lourds et encombrants, et dans la pratique, un opérateur tel qu'un serveur de restaurant ne peut le conserver en permanence dans une poche sans gêne excessive. Cet encombrement est encore accentué lorsque le clavier de l'appareil est assorti d'une paroi saillante formant écran destinée à préserver la confidentialité du code composé sur ledit clavier par le titulaire de la carte. Pour tenter de pallier les problèmes de poids et d'encombrement précités, il a été développé récemment un appareil scindé en deux parties, à savoir une partie fixe, alimentée par le secteur et comportant une partie des moyens de traitement et une imprimante pour tickets, et une partie portable comprenant le coupleur pour carte à microprocesseur, un clavier et un afficheur. Cette partie portable peut venir se connecter physiquement sur la partie fixe pour y transférer, au cours de la transaction, au moins une partie des données (montant, numéro de carte,...) relatives à cette transaction.

Mais cet appareil ne permet pas de pallier l'inconvénient indiqué plus haut en matière de confidentialité de la composition du code. En outre, il peut nécessiter d'amener la partie portable, dans laquelle la carte à microprocesseur est encore en place, hors de la vue du titulaire de la carte, avec en conséquence un risque de fraude important dans la mesure où l'opérateur dispose à la fois de la carte et du code confidentiel s'il a pu observer sa composition par le titulaire sur le clavier. On connait également dans l'état de la technique des certificateurs bancaires décrits par exemple dans le document "l'échos des recherches N°134, quatrième trimestre 1988, page 15-24, relatif "au paiement électronique" de P.REMERY, PC PAILLES et F. LAY. Ce document divulgue le principe général des terminaux de paiement électronique et le principe du contrôle du code confidentiel, selon lequel le porteur compose un code confidentiel sur un clavier d'un certificateur. Ce document ne divulgue toutefois aucune solution permettant de sécuriser la saisie du code, et en particulier d'éviter qu'un tiers n'est connaissance du code confidentiel introduit par le porteur autorisé sur le clavier du terminal du paiement électronique.

La présente invention vise à pallier ces inconvénients de la technique antérieure. Elle propose à cet effet un dispositif pour effectuer des transactions monétaires avec des cartes à microprocesseur telles que des cartes bancaires, du type comprenant, dans un boîtier, un coupleur pour carte à microprocesseur, une fente située au droit du coupleur pour l'introduction partielle d'une carte à microprocesseur, un clavier pour la saisie d'au moins un code confidentiel associé à une carte introduite dans le coupleur, et des moyens pour traiter et valider la transaction, caractérisé en ce que la fente est disposée de façon adjacente à un bord du clavier et en ce que le coupleur et la fente sont positionnés pour qu'une partie de la carte restant à l'extérieur du boîtier après l'introduction partielle s'étende au moins en partie à l'aplomb du clavier en formant elle-même un écran vis-à-vis des observateurs extérieurs pendant la saisie du code confidentiel.

Selon un autre aspect, l'invention propose un procédé pour réaliser une transaction à l'aide d'un dispositif selon la revendication 6 comprenant les étapes suivantes :
(a) un opérateur introduit la carte à microprocesseur d'un titulaire de carte dans le coupleur de la partie portable,
(b) l'opérateur saisit le montant de la transaction sur le clavier de la partie portable,
(c) la partie portable lit dans la carte à microprocesseur un identificateur et un code confidentiel propres à ladite carte,
(d) le titulaire saisit un code confidentiel sur le clavier de la partie portable,
(e) la carte à microprocesseur vérifie le code confidentiel saisi, et le résultat de cette vérification est affiché sur le moyen d'affichage,
(f) si la vérification aboutit favorablement, l'opérateur retire la carte dudit coupleur et la restitue au titulaire,
(g) l'opérateur rapproche la partie portable de la partie fixe,
(h) la partie portable transmet à la partie fixe par les moyens d'émission et de réception, des informations représentatives du montant saisi de la transaction et au moins de l'identificateur de la carte à microprocesseur,
(i) la partie fixe mémorise la transaction et édite un ticket de transaction.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est un schéma-bloc d'un équipement de transaction selon l'invention,
la figure 2 est une vue de côté en élévation d'une partie portable de l'équipement de la figure 1,
la figure 3 est une vue en coupe verticale longitudinale de la partie de la figure 2,
la figure 4 est une vue de dessus de la partie des figures 2 et 3,
la figure 5 est une vue en bout de la partie des figures 2 à 4,
la figure 6 est une vue en perspective de la partie des figures 2 à 5 et d'une première forme de réalisation d'une autre partie de l'équipement,
la figure 7 est une vue de dessus d'une deuxième forme de réalisation de ladite autre partie, et
la figure 8 est une vue en élévation de côté de la partie de la figure 7 recevant plusieurs parties portables selon les figures 2 à 5.

On notera préliminairement que, d'une figure à l'autre, des parties ou composants identiques ou similaires seront désignés autant que possible par les mêmes signes de référence.

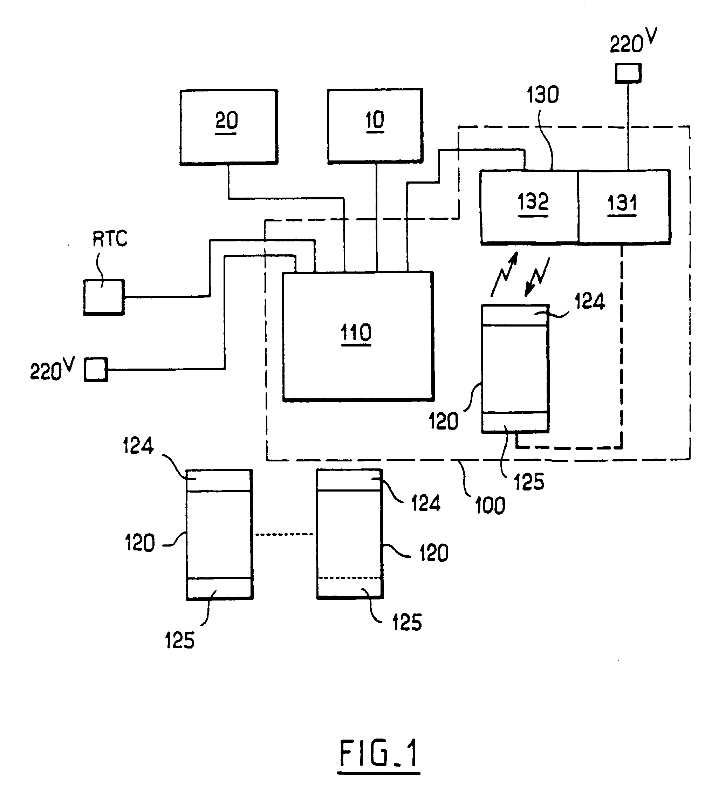

En référence tout d'abord à la figure 1, on a représenté un équipement de transaction, globalement indiqué en 100, qui est associé à une caisse enregistreuse électronique 10 et à un dispositif 20 d'écriture/lecture de chèques, de façon classique en soi.

L'appareil 100 comprend une partie fixe 110 et au moins une partie ou boîtier mobile 120, portable, et de préférence une pluralité de celles-ci comme illustré.

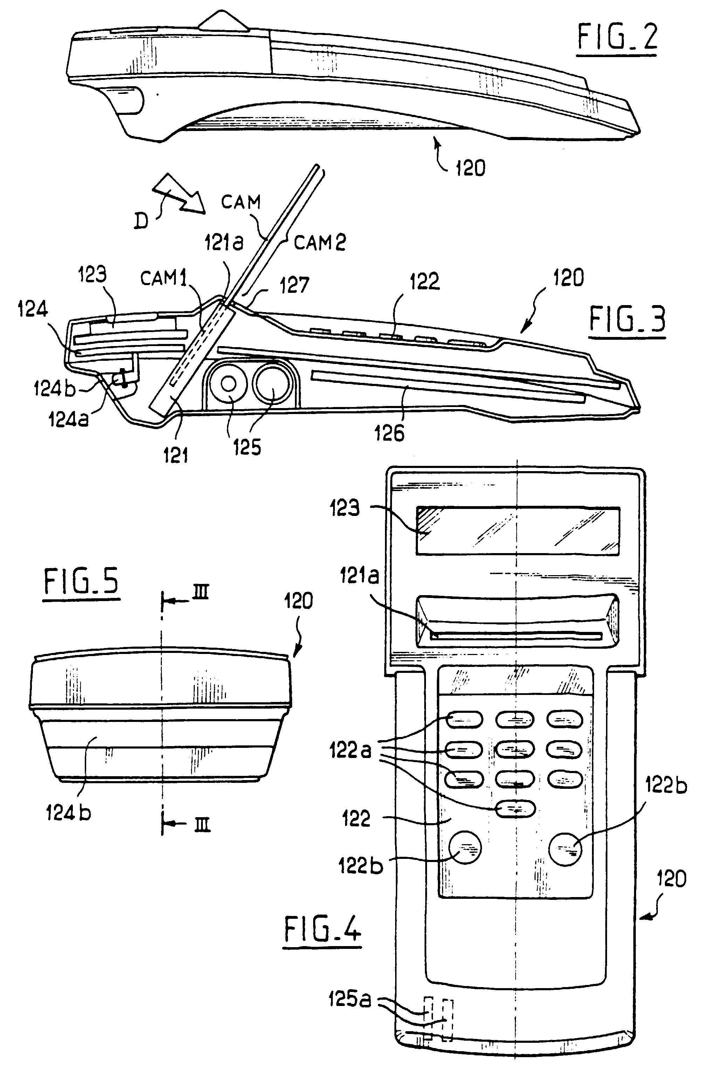

Un tel boîtier portable, représenté plus en détail sur les figures 2 à 5, comprend tout d'abord un coupleur de carte à microprocesseur 121 destiné à coopérer avec une carte à microprocesseur CAM insérée dans une fente 121a du boîtier. Il peut s'agir par exemple d'un coupleur répondant aux spécifications de la norme 7816-3, disponible dans le commerce. Le boîtier 120 abrite en outre un clavier 122 comprenant par exemple douze touches réparties comme ci-dessous :
- dix touches numériques "0" à "9";
- une touche de validation permettant classiquement de valider un nombre (notamment montant de transaction ou code confidentiel) introduit par les touches numériques; et
- une touche de correction permettant la correction du nombre saisi en cas d'erreur.

Bien entendu, le clavier 122 peut comporter également toute autre touche utilisée conventionnellement dans les équipements de transaction, et notamment une touche "00" pour la saisie rapide des centimes, une touche d'annulation et une touche de fonction.

Comme on l'observe sur la figure 4, les touches numériques 122a sont de dimensions relativement réduites et regroupées dans la partie haute du clavier, tandis que les touches de validation et de correction 122b sont des touches circulaires de surface plus importante disposées dans la partie basse du clavier. Les opérations de saisie de nombres en sont rendues plus faciles.

Ce clavier permet principalement d'initialiser les circuits électroniques du boîtier 120, de saisir un montant de transaction, de saisir un code confidentiel et de valider les saisies et ordres qui sont appliqués au boîtier, comme on le verra en détail plus loin.

Le boîtier 120 comporte en outre un module d'affichage 123 composé de façon classique d'un afficheur à cristaux liquides (par exemple une ligne de seize caractères alphanumériques).

On trouve également dans le boîtier un circuit d'émission/réception infrarouge 124 comportant un émetteur tel qu'une diode électroluminescente 124a émettant dans le domaine infrarouge, et un récepteur (non représenté) tel qu'un phototransistor sensible au domaine des infrarouges. La diode 124a et le phototransistor sont situés au droit d'une fenêtre opaque vis-à-vis de la lumière mais transparente vis-à-vis du rayonnement infrarouge.

Le boîtier comporte par ailleurs des batteries 125, de préférence sous forme d'accumulateurs rechargeables, permettant d'assurer l'alimentation électrique de ces divers composants. Deux plots de connexion électrique 125a, disposés par exemple côte-à-côte et de façon affleurante à la surface inférieure du boîtier, permettent la connexion de ce dernier à un bloc de recharge comme on le verra plus loin.

Enfin il est prévu dans le boîtier un module électronique 126, construit par exemple autour d'un microcontrôleur, d'une mémoire morte contenant un programme d'exploitation, et d'une mémoire vive, et destiné à en régir le fonctionnement. Ce module électronique comporte un circuit logique de décodage du clavier, un circuit de pilotage de l'afficheur à cristaux liquides, une interface avec le coupleur de carte à microprocesseur et une autre interface avec le circuit d'émission/réception infrarouge.

Ces composants sont classiques pour l'électronicien de métier et ne seront pas décrits en détail.

De nouveau en référence à la figure 1, la partie fixe 110 de l'appareil de transaction 100 abrite des composants de type classique en soi, et notamment une unité centrale associée à des mémoires vives et des mémoires mortes, une interface avec le réseau téléphonique public ou avec un réseau télématique, un dispositif d'impression destiné à imprimer notamment des tickets de transaction, un circuit d'interface avec la caisse enregistreuse 10 et le dispositif d'écriture/lecture de chèques 20, des moyens de traitement et de mémorisation de données. Les fonctions de cette partie fixe seront décrites ultérieurement.

A la partie fixe 110 est par ailleurs associé un dispositif auxiliaire 130 formant à la fois bloc de recharge 131 pour les accumulateurs de la ou des parties portables 120, et dispositif d'émission/réception de signaux infrarouges 132 pour établir une communication de proximité, sans fil, entre la partie fixe 110 et le ou les boîtiers portables 120. A cet effet, le dispositif auxiliaire 130 est alimenté par le secteur et est relié à la partie fixe 110 par une ligne électrique 115, par exemple une ligne standard de communication numérique série.

Selon un aspect de la présente invention, et à nouveau en référence aux figures 2 à 5, le coupleur de carte à microprocesseur 121 et la fente 121a permettant l'introduction partielle (de façon conventionnelle) de la carte CAM sont disposés dans le boîtier 120 de telle sorte que la carte CAM, une fois mise en place, forme un écran destiné à diminuer le risque qu'un tiers, notamment l'opérateur du boîtier portable, puisse lire sur le clavier 122 les enfoncements de touches numériques successifs indiquant le code confidentiel composé par le titulaire de la carte CAM lors d'une transaction.

Plus précisément, de façon classique, une carte à microprocesseur n'est introduite que partiellement dans le coupleur (par sa partie CAM1), environ deux tiers à trois quarts de la longueur de ladite carte (partie notée CAM2) restant à l'extérieur du coupleur. La fente 121a est disposée le long du bord du clavier 122 qui est le plus éloigné de l'utilisateur (bord "arrière" dans la suite de la description), tandis que le coupleur 121 et ladite fente sont positionnés de telle sorte que, lorsqu'une carte CAM est introduite, la partie extérieure CAM2 de celle-ci vienne se placer essentiellement à l'aplomb du clavier 122 (voir figure 3). De la sorte, le clavier 122 est au moins partiellement masqué par la carte CAM pour un observateur regardant le boîtier 120 à partir de la direction générale D de la figure 3, qui est la direction d'observation la plus courante notamment lors d'une transaction entre un serveur et un consommateur dans un restaurant.

De préférence, le clavier 122 est dimensionné pour avoir une largeur de préférence voisine ou seulement légèrement supérieure à la largeur standard de la carte CAM, pour que le rôle d'écran de cette dernière soit optimal.

En outre, pour faciliter l'engagement de la carte CAM dans le coupleur 121, la fente 121a est de préférence prévue dans une partie de paroi 127 de la face supérieure du boîtier 120 qui est sensiblement perpendiculaire à la direction d'insertion de la carte et qui fait légèrement saillie à partir de ladite face supérieure.

De façon préférée mais non limitative, l'inclinaison de la carte CAM une fois mise en place, par rapport au plan du clavier 122, peut être comprise entre environ 45° et environ 60°.

On va maintenant décrire en détail les fonctionnalités essentielles d'un équipement tel que décrit ci-dessus, ainsi que le déroulement d'une transaction.

La partie fixe 110 de l'équipement a pour fonctions essentielles :
- d'effectuer les vérifications sur listes noires, soit de façon locale à partir d'une liste d'identificateurs de cartes à microprocesseur "interdites", liste contenue dans une mémoire de la partie 100;
- d'effectuer via le réseau téléphonique ou télématique des demandes d'autorisation, notamment lorsque le montant de la transaction dépasse un certain seuil;
- de mémoriser les transactions effectuées et le cas échéant des informations relatives à des transactions ayant échoué ou à des opérations d'interdiction de carte réalisées par exemple lorsqu'un présumé titulaire d'une carte a composé trois codes confidentiels erronés sur le clavier 122;
- d'éditer les tickets de transactions;
- de transférer un fichier de transactions mémorisées pour une période donnée (par exemple quotidienne) vers un site central de traitement bancaire, etc.

Chaque boîtier portable 120, avec ses composants tels qu'ils ont été décrits, assure :
- la lecture des cartes à microprocesseur;
- leur authentification,
- la saisie du montant de la transaction par le clavier 122;
- la présentation du code confidentiel, composé par le titulaire de la carte sur le clavier 122, à la carte, afin de vérifier dans cette dernière que le code est correct,
- la gestion de la procédure de calcul d'un certificat par la carte à mémoire, par envoi à celle-ci d'un aléa (par exemple basé sur la date ou l'heure courante).

Le boîtier 120 est également capable de transmettre à la partie fixe 110, via la liaison infrarouge 124, 132, les informations suivantes :
- numéro de la carte;
- montant de la transaction;
- aléa fourni à la carte CAM (par exemple date ou heure),
- certificat calculé par la carte CAM.

On observera ici que le boîtier 120, du fait qu'il comporte des composants légers et peu encombrants, est lui-même de dimensions et de poids réduit, et peut être transporté de façon extrêmement aisée par un opérateur, qui peut le conserver en permanence dans une poche ou à sa ceinture sans risque de gêne.

On pallie ainsi certains inconvénients des équipements connus cités en introduction de la présente demande.

Par ailleurs, de façon particulièrement avantageuse, l'architecture de l'équipement de l'invention en trois parties 110, 120 (éventuellement en plusieurs exemplaires) et 130 permet de l'adapter à des équipements fixes existants. Plus précisément, à partir d'un équipement connu comprenant une partie fixe comprenant un connecteur électrique multibroches pour la liaison physique temporaire avec une partie portable, le câble de liaison de l'appareil auxiliaire peut venir se connecter sur ledit connecteur, aucune modification physique de la partie fixe n'étant nécessaire. Dans ce cas, l'ensemble constitué par la partie portable 120 et la partie auxiliaire 130 vient se substituer à l'ancienne partie portable.

On va maintenant décrire en détail la suite des opérations effectuées dans le cadre d'une transaction.

On précisera tout d'abord qu'à la première mise sous tension de l'équimement 100, une procédure d'initialisation est déclenchée par la partie fixe 110. Celle-ci, via la liaison infrarouge, transmet à chaque boîtier portable 120 les informations suivantes :
- date et heure courantes;
- numéro d'identification du commercant titulaire de l'équipement, mémorisé dans la partie fixe.

A partir de cet instant, le circuit 126 de chaque boîtier 120 est capable de mettre à jour l'heure et la date à l'aide de son propre logiciel. C'est de préférence l'heure que l'on utilise comme aléa pour le calcul d'un certificat, comme on va le voir plus loin.

On notera en outre qu'une initialisation d'un boîtier portable 120 peut être réalisée à la demande. Pour ce faire, on peut prévoir qu'une combinaison de touches particulières sur le clavier 122 provoque une procédure d'initialisation, qui est signalée sur l'afficheur 123. L'opérateur saisit alors sur ledit clavier 122 son numéro d'identification propre, par exemple à un chiffre. L'initialisation proprement-dite est alors réalisée en approchant le boîtier 120 de l'appareil auxiliaire 130, en en enfonçant la touche "validation" du clavier 122. De façon transparente pour l'opérateur, le boîtier portable 120 transmet alors à la partie fixe 110, par la liaison infrarouge, un numéro d'identification du boîtier 120, mémorisé en permanence dans celui-ci, et un code particulier de demande d'initialisation. L'envoi de la date, de l'heure et du numéro de commerçant a alors lieu vers le boîtier 120 comme décrit plus haut.

Au début d'une transaction, une carte CAM est introduite par l'opérateur dans le coupleur 121 d'un boîtier 120, puis lue. Ledit opérateur compose alors sur le clavier 122 le montant de la transaction et le valide.

Le boîtier 120 se place alors dans un mode d'attente de composition de code confidentiel par le titulaire de la carte. Le boîtier 120 est alors présenté par l'opérateur au titulaire, qui compose son code. Le rôle de masque rempli par la carte pendant cette phase a été décrit plus haut. On notera qu'au cours de cette saisie de code, la carte doit être présente dans le coupleur 121.

Après vérification dans la carte CAM du fait que le code est correct, le circuit 126 applique à la carte CAM via le coupleur 121 l'aléa en vue de la restitution par ladite carte d'un certificat, qui est alors mémorisé dans la mémoire vive du circuit 126.

La carte CAM peut alors être restituée à son titulaire, et les données de transaction doivent alors être transmises à la partie fixe 110. Un message correspondant est alors affiché sur l'afficheur 123.

On observera que, pour effectuer cette transmission, il peut s'avérer nécessaire de rapprocher le boîtier portable 120 de l'équipement auxiliaire 130 assurant la réception infrarouge. Dans ce cas, et selon un autre aspect intéressant de l'invention, la carte à microprocesseur ayant été préalablement retirée du coupleur 121 et restituée à son titulaire (car elle n'a plus à intervenir dans la transaction), on évite de cette manière tout risque d'abus ou de fraude, dans la mesure où le titulaire de la carte, qui a délivré au boîtier 120 son code confidentiel, garde en permanence ladite carte dans son champ de vision.

L'envoi des données de transaction à la partie fixe 110 par le boîtier 120 est de préférence déclenché par l'enfoncement de la touche "validation" du clavier 122 par l'opérateur. Les informations transmises sont de préférence les suivantes :
- le numéro d'identification du boîtier portable 120;
- un code de demande de transaction, préprogrammé dans le boîtier 120 et reconnu par la partie fixe 110;
- un numéro de transaction, obtenu de préférence par lecture d'un compteur prévu (sous forme de mémoire vive) dans le circuit 126 et incrémenté d'une unité à chaque transaction;
- le montant de la transaction, tel qu'il a été saisi;
- le numéro de la carte, préalablement lu dans celle-ci;
- la date et l'heure (aléa);
- le certificat préalablement calculé par la carte.

Une information d'accusé de réception est alors de préférence transmise par la partie fixe 110 au boîtier 120, par la liaison infrarouge, pour que ledit boîtier effectue une remise à zéro de la partie de sa mémoire contenant les paramètres de transaction.

La partie fixe effectue alors les opérations :
- de vérification de liste noire;
- le cas échéant, de demande d'autorisation à un site central, lorsque le montant de la transaction excède un certain seuil;
- d'impression du ticket de transaction, avec les rubriques classiques; et
- de mémorisation de la transaction dans sa mémoire vive.

Le ticket est alors donné au titulaire de la carte. Avantageusement, l'équipement 100 est également conçu pour traiter les cartes bancaires à piste magnétique, auquel cas l'ensemble des opérations, de la lecture de la carte à la délivrance du ticket, est réalisé sur la partie fixe 110.

De préférence également, la partie fixe 110 est programmée de manière à ce que, si la transaction n'aboutit pas pour une raison ou pour une autre, un ticket soit imprimé et porte une information relative à ce non-aboutissement et à son motif. Il peut s'agir par exemple d'une carte refusée, d'une carte interdite ou d'un abandon volontaire de la transaction.

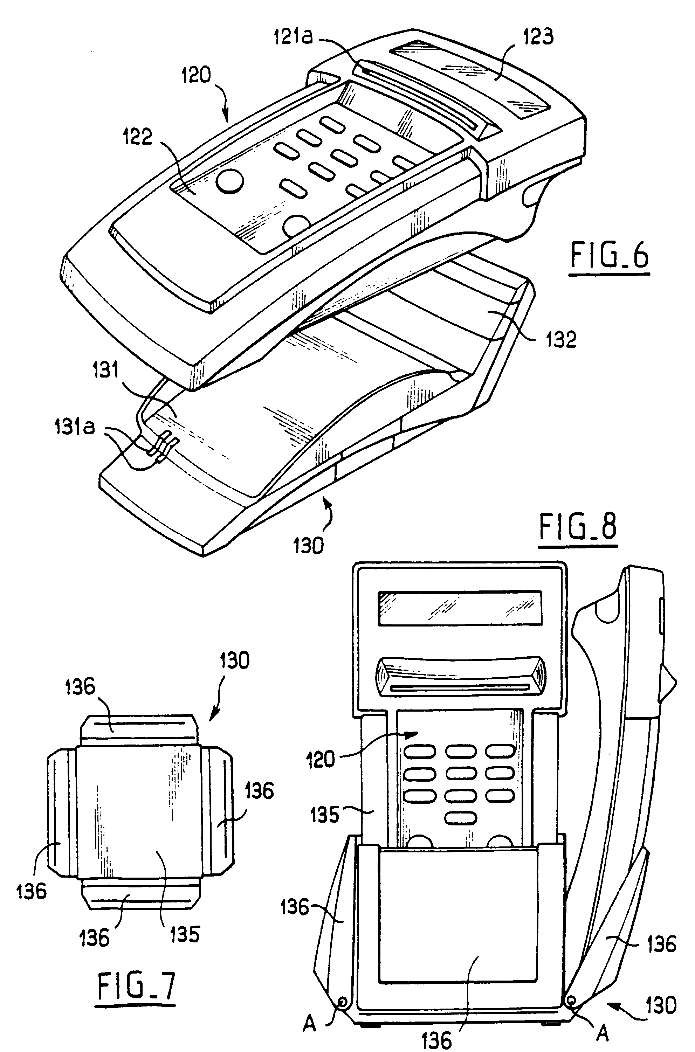

On a représenté sur la figure 6 un exemple de réalisation d'un équipement auxiliaire 130, qui comporte un logement pour un boîtier portable 120, de manière à ce que les plots 125a de recharge de la batterie 125 viennent au contact de plots correspondants 131a prévus au fond du logement. L'émetteur/récepteur infrarouge 132 est prévu dans une partie formant dosseret de l'appareil 130.

Les figures 7 et 8 montrent un appareil auxiliaire 130 ayant les mêmes fonctions, mais qui tient lieu de support en "libre-service" et de moyen de recharge pour quatre boîtiers portables 120.

Cet appareil comprend une base centrale 135 de forme généralement parallélépipédique, comportant quatre faces latérales généralement verticales. A la base de chaque face latérale est articulé autour d'un axe horizontal A un volet 136 dont la hauteur est une fraction de la hauteur de chaque boîtier 120. Chaque volet 136 peut s'écarter, de préférence à l'encontre d'une force élastique, de la paroi latérale associée pour permettre l'introduction de la partie de base d'un boîtier portable 120 orienté verticalement, comme illustré sur la partie droite de la figure 8. Des contacts de recharge (non représentés) sont prévus dans la région de fond de chaque logement défini entre une paroi latérale et le volet associé.

De façon particulièrement avantageuse, le dispositif d'émission/réception infrarouge est logé dans la région du sommet de la base centrale 135.

Bien entendu, la présente invention n'est nullement limitée aux formes de réalisation décrites ci-dessus et représentées sur les dessins.

En particulier, les informations transmises entre le boîtier portable et la partie fixes peuvent être constitués indifféremment de signaux acoustiques ou électromagnétiques.

## Revendications

1. Dispositif (100) pour effectuer des transactions monétaires avec des cartes à microprocesseur telles que des cartes bancaires, du type comprenant, dans un boîtier (120), un coupleur (121) pour carte à microprocesseur, une fente (121a) située au droit du coupleur pour l'introduction partielle d'une carte à microprocesseur (CAM), un clavier (122) pour la saisie d'au moins un code confidentiel associé à une carte introduite dans le coupleur, et des moyens (126, 110) pour traiter et valider la transaction, caractérisé en ce que la fente (121a) est disposée de façon adjacente à un bord du clavier (122) et en ce que le coupleur et la fente sont positionnés pour qu'une partie (CAM2) de la carte restant à l'extérieur du boîtier après l'introduction partielle s'étende au moins en partie à l'aplomb du clavier (122) en formant elle-même un écran vis-à-vis des observateurs extérieurs pendant la saisie du code confidentiel.

2. Dispositif selon la revendication 1, caractérisé en ce qu'il comprend une partie fixe (110) abritant au moins une partie des moyens de traitement et de validation, et au moins une partie portable (120), et en ce que ledit boîtier est celui de la partie portable.

3. Dispositif selon la revendication 1 ou 2, caractérisé en ce que le clavier (122) est disposé dans le plan général d'une paroi supérieure dudit boîtier, en ce que la fente (121a) est disposée le long d'un bord arrière dudit clavier et en ce que le coupleur et la fente définissent ensemble une direction d'introduction de la carte oblique par rapport audit plan.

4. Dispositif selon la revendication 3, caractérisé en ce que l'angle entre la direction d'introduction de la carte (CAM) et le plan du clavier (122) est compris entre environ 45° et 60°.

5. Dispositif selon l'une des revendications 3 et 4, caractérisé en ce que ladite fente (121a) est prévue dans une partie (127) de la paroi supérieure du boîtier essentiellement perpendiculaire à ladite direction d'introduction, en saillie à partir dudit plan général de ladite paroi supérieure.

6. Dispositif selon la revendication 2, caractérisé en ce que sa partie portable (120) comprend ledit coupleur (121) pour carte à microprocesseur et la fente d'introduction associée (121a), ledit clavier (122), un moyen d'affichage (123), un moyen d'émission d'informations (124) sous forme de signaux acoustiques ou électromagnétiques, et un accumulateur rechargeable (125), et en ce que sa partie fixe (110, 130) comprend des moyens de traitement, de validation et de mémorisation de transaction, un moyen d'impression de tickets de transaction et un moyen (132) de réception des informations sous forme de signaux acoustiques ou électromagnétiques émises par ladite partie portable.

7. Dispositif selon la revendication 2 ou 6, caractérisé en ce qu'il comprend une pluralité de parties portables (120), et en ce que chaque partie portable comporte des moyens pour émettre vers la partie fixe (110), par ledit moyen d'émission, un identificateur de ladite partie portable.

8. Dispositif selon l'une des revendications 6 et 7, caractérisé en ce que la partie fixe (110) comprend également un moyen (132) d'émission d'informations sous forme de signaux acoustiques ou électromagnétiques, en ce que la ou chaque partie portable (120) comprend également un moyen (124) de réception desdites informations émises par la partie fixe, et en ce que la partie fixe comprend des moyens pour émettre vers la ou l'une des parties portables une information relative à la validation de la transaction.

9. Dispositif selon l'une des revendications 6 à 8, caractérisé en ce que lesdits signaux sont des rayons infrarouges.

10. Dispositif selon la revendication 2, caractérisé en ce que la ou chaque partie portable (120) comprend un accumulateur rechargeable (125) et un moyen (124) d'émission d'informations sous forme de signaux électromagnétiques ou acoustiques, et en ce que le partie fixe comprend une unité auxiliaire (130) reliée à elle par un câble (115) et comportant au moins un réceptacle (131) pour une partie portable en vue de la recharge de son accumulateur et un moyen (132) de réception d'informations sous forme de signaux électromagnétiques ou acoustiques.

11. Dispositif selon la revendication 10, caractérisé en ce que ladite unité auxiliaire (130) comprend une pluralité de réceptacles (131) pour une pluralité de parties portables.

12. Dispositif selon la revendication 11, caractérisé en ce que ladite unité auxiliaire comprend une base centrale (135) abritant ledit moyen de réception d'informations sous forme de signaux électromagnétiques ou acoustiques et définissant une pluralité de faces latérales, et dans une région inférieure de chaque face latérale, un volet articulé (136) pouvant être ouvert pour définir entre lui et ladite face latérale un réceptacle (131) pour la recharge d'une partie portable.

13. Procédé pour réaliser une transaction à l'aide d'un dispositif selon la revendication 6, comprenant les étapes suivantes :
(a) un opérateur introduit la carte à microprocesseur (CAM) d'un titulaire de carte dans le coupleur (121) de la partie portable (120),
(b) l'opérateur saisit le montant de la transaction sur le clavier (122) de la partie portable,
(c) la partie portable lit dans la carte à microprocesseur (CAM) un identificateur et un code confidentiel propres à ladite carte,
(d) le titulaire saisit un code confidentiel sur le clavier (122) de la partie portable,
(e) la carte à microprocesseur (CAM) vérifie le code confidentiel saisi et le résultat de cette vérification est affiché sur le moyen d'affichage (123);
(f) si la vérification aboutit favorablement, l'opérateur retire la carte dudit coupleur (121) et la restitue au titulaire,
(g) l'opérateur rapproche la partie portable (120) de la partie fixe (110, 130),
(h) la partie portable transmet à la partie fixe par les moyens d'émission et de réception, des informations représentatives du montant saisi de la transaction et au moins de l'identificateur de la carte à microprocesseur,
(i) la partie fixe mémorise la transaction et édite un ticket de transaction.

14. Procédé selon la revendication 13, caractérisé en ce qu'il comprend en outre, avant l'étape (f), l'étape consistant à calculer un certificat dans la carte à microprocesseur (CAM) à partir d'un aléa fourni par les moyens de traitement (126) de la partie portable, et en ce que l'étape (h) comprend également la transmission dudit certificat à la partie fixe (110, 130), en vue de sa mémorisation et/ou de son impression sur le ticket de transaction.

15. Procédé selon la revendication 13 ou 14, mis en oeuvre avec un dispositif comprenant une pluralité de parties portables (120), caractérisé en ce que l'étape (h) comprend également la transmission à la partie fixe (110, 130) d'un identificateur de la partie portable émettrice.

## Patentansprüche

1. Vorrichtung (100) zur Durchführung von Geldtransaktionen mit Mikroprozessorkarten wie Bankkarten, umfassend in einem Gehäuse (120) einen Kartenleser für eine Mikroprozessorkarte, einen Schlitz (121a), der auf derselben Geraden wie der Kartenleser für die teilweise Einführung einer Mikroprozessorkarte (CAM) angeordnet ist, eine Tasteneinheit (122) für die Eingabe von mindestens einem vertraulichen Code in Zusammenhang mit einer Karte, die in den Kartenleser eingeführt wird, und Mittel (126, 110) zur Durchführung und Validierung der Transaktion, dadurch gekennzeichnet, daß der Schlitz (121a) benachbart zu einem Rand der Tasteneinheit (122) angeordnet ist, und dadurch, daß der Kartenleser und der Schlitz so positioniert sind, daß ein Teil (CAM2) der Karte, der außerhalb des Gehäuses bleibt, nach der teilweisen Einführung sich zumindest teilweise in lotrechter Stellung der Tasteneinheit (122) erstreckt und dabei selbst eine Abschirmung gegenüber den Beobachtern von außen während der Eingabe des vertraulichen Codes bildet.

2. Vorrichtung nach Anspruch 1, dadurch gekennzeichnet, daß sie einen festen Teil (110), der mindestens einen Teil der Durchführungs- und Validierungsmittel abschirmt, und mindestens einen tragbaren Teil (120) umfaßt, und dadurch, daß das Gehäuse jenes des tragbaren Teils ist.

3. Vorrichtung nach Anspruch 1 oder 2, dadurch gekennzeichnet, daß die Tasteneinheit (122) in der Gesamtebene einer oberen Wand des Gehäuses angeordnet ist, und dadurch, daß der Schlitz (121a) entlang eines hinteren Rands der Tasteneinheit angeordnet ist und dadurch, daß der Kartenleser und der Schlitz gemeinsam eine Einführrichtung der Karte definieren, die zur Ebene schräg ist.

4. Vorrichtung nach Anspruch 3, dadurch gekennzeichnet, daß der Winkel zwischen der Einführrichtung der Karte (CAM) und der Ebene der Tasteneinheit (122) zwischen etwa 45° und 60° liegt.

5. Vorrichtung nach einem der Ansprüche 3 und 4, dadurch gekennzeichnet, daß der Schlitz (121a) in einem Teil (127) der oberen Wand des Gehäuses vorgesehen ist, der im wesentlichen senkrecht zur Einführungsrichtung steht, auskragend von der Gesamtebene der oberen Wand.

6. Vorrichtung nach Anspruch 2, dadurch gekennzeichnet, daß ihr tragbarer Teil (120) den Kartenleser (121) für eine Mikroprozessorkarte und den damit verbundenen Einführungsschlitz (121a), die Tasteneinheit (122), ein Anzeigemittel (123), ein Informationsausgabemittel (124) in Form von akustischen oder elektromagnetischen Signalen und einen wiederaufladbaren Akkumulator (125) umfaßt, und dadurch, daß ihr fester Teil (110, 130) Mittel zur Durchführung, Validierung und Speicherung der Transaktion, ein Mittel zum Drucken von Bestätigungen der Transaktion und ein Mittel (132) zum Empfang der Informationen in Form von akustischen oder elektromagnetischen Signalen umfaßt, die von dem tragbaren Teil ausgegeben werden.

7. Vorrichtung nach Anspruch 2 oder 6, dadurch gekennzeichnet, daß sie eine Vielzahl an beweglichen Teilen (120) umfaßt, und dadurch, daß jeder tragbare Teil Mittel umfaßt, um zum festen Teil (110) hin über das Ausgabemittel ein Erkennungszeichen des tragbaren Teils auszugeben.

8. Vorrichtung nach einem der Ansprüche 6 und 7, dadurch gekennzeichnet, daß der feste Teil (110) weiters ein Mittel (132) zur Ausgabe von Informationen in Form von akustischen oder elektromagnetischen Signalen umfaßt, und dadurch, daß der oder jeder tragbare Teil (120) ebenfalls ein Mittel (124) zum Empfang der Informationen umfaßt, die von dem festen Teil ausgegeben werden, und dadurch, daß der feste Teil Mittel umfaßt, um zu dem oder einem der tragbaren Teile hin eine Information bezüglich der Validierung der Transaktion abzugeben.

9. Vorrichtung nach einem der Ansprüche 6 bis 8, dadurch gekennzeichnet, daß die Signale Infrarotstrahlen sind.

10. Vorrichtung nach Anspruch 2, dadurch gekennzeichnet, daß der oder jeder tragbare Teil (120) einen aufladbaren Akkumulator (125) und ein Mittel (124) zur Ausgabe von Informationen in Form von elektromagnetischen oder akustischen Signalen umfaßt, und dadurch, daß der feste Teil eine Hilfseinheit (130) umfaßt, die damit über ein Kabel (115) verbunden ist und mindestens eine Aufnahmevorrichtung (131) für einen tragbaren Teil zum Zwecke der Aufladung seines Akkumulators umfaßt, und ein Mittel (132) zur Aufnahme von Informationen in Form von elektromagnetischen oder akustischen Signalen.

11. Vorrichtung nach Anspruch 10, dadurch gekennzeichnet, daß die Hilfseinheit (130) eine Vielzahl an Aufnahmevorrichtungen (131) für eine Vielzahl an tragbaren Teilen umfaßt.

12. Vorrichtung nach Anspruch 11, dadurch gekennzeichnet, daß die Hilfseinheit einen zentralen Unterbau (135) umfaßt, der das Mittel zur Aufnahme von Informationen in Form von elektromagnetischen oder akustischen Signalen abschirmt und eine Vielzahl von Seitenflächen definiert, und in einem unteren Bereich jeder Seitenflächen eine ausschwenkbare Klappe (136) umfaßt, die geöffnet werden kann, um zwischen sich und der Seitenfläche eine Aufnahmevorrichtung (131) für die Aufladung des tragbaren Teils zu definieren.

13. Verfahren zur Durchführung einer Transaktion mit Hilfe einer Vorrichtung nach Anspruch 6, folgende Schritte umfassend:
(a) ein Bediener führt die Mikroprozessorkarte (CAM) eines Karteninhabers in den Kartenleser (121) des tragbaren Teils (120) ein,
(b) der Bediener gibt den Betrag der Transaktion über die Tasteneinheit (122) des tragbaren Teils ein,
(c) der tragbare Teil liest von der Mikroprozessorkarte (CAM) ein Erkennungszeichen und einen der Karte eigenen vertraulichen Code ab,
(d) der Inhaber gibt einen vertraulichen Code über die Tasteneinheit (122) des tragbaren Teils ein,
(e) die Mikroprozessorkarte (CAM) überprüft den vertraulichen Code, der eingegeben wurde, und das Ergebnis dieser Überprüfung wird auf dem Anzeigemittel (123) angezeigt;
(f) wenn die Überprüfung positiv ausfällt, zieht der Bediener die Karte aus dem Kartenleser (121) heraus und gibt sie dem Inhaber zurück,
(g) der Bediener rückt den tragbaren Teil (120) an den festen Teil (110, 130) heran,
(h) der tragbare Teil überträgt an den festen Teil mit Hilfe der Ausgabe- und Empfangsmittel Informationen hinsichtlich des erfaßten Betrages der Transaktion und mindestens hinsichtlich des Erkennungszeichens der Mikroprozessorkarte,
(i) der feste Teil speichert die Transaktion und gibt eine Transaktionsbestätigung aus.

14. Verfahren nach Anspruch 13, dadurch gekennzeichnet, daß es unter anderem vor dem Schritt (f) den Schritt umfaßt, der in der Erstellung einer Bescheinigung in der Mikroprozessorkarte (CAM) von Informationen besteht, die von den Durchführungsmitteln (126) des beweglichen Teils zur Verfügung gestellt werden, und dadurch, daß der Schritt (h) auch die Übertragung der Bescheinigung an den festen Teil (110, 130) umfaßt, zum Zwecke ihrer Speicherung und/oder ihres Ausdrucks auf einer Bestätigung der Transaktion.

15. Verfahren nach Anspruch 13 oder 14, durchgeführt mit einer Vorrichtung, die eine Vielzahl an tragbaren Teilen (120) umfaßt, dadurch gekennzeichnet, daß der Schritt (h) auch die Übertragung eines Erkennungszeichens des ausgebenden tragbaren Teils an den festen Teil (110, 130) umfaßt.

## Claims

1. A device (100) for carrying out monetary transactions with microprocessor cards such as bank cards, of the kind comprising, in a housing (120), a coupler (121) for a microprocessor card, a slot (121a) located perpendicularly to the coupler for the partial introduction of a microprocessor card (CAM), a keyboard (122) to enter at least one confidential code linked to a card introduced in the coupler, and transaction processing and validation means (126,110), characterized in that the slot (121a) is disposed adjacent to an edge of the keyboard (122) and in that the coupler and the slot are located in order that a part (CAM2) of the card remaining outside of the housing after the partial introduction, extends at least partially over the keyboard (122) thus forming by itself a screen towards external observers when the confidential code is entered.

2. A device according to claim 1, characterized in that it comprises a fixed part (110) housing at least a part of the processing and validation means, and at least a portable part (120), and in that said housing is the one of the portable part.

3. A device according to claim 1 or 2, characterized in that the keyboard (122) is located in the general plane of a upper surface of said housing, in that the slot (121a) is located along a rear edge of said keyboard and in that the coupler and the slot define together an oblique direction for the introduction of the card, with respect to said plane.

4. A device according to claim 3, characterized in that the angle between the direction of introduction of the card (CAM) and the plane of the keyboard (122) is comprised between about 45° and 60°.

5. A device according to claim 3 or 4, characterized in that said slot (121a) is provided in a part (127) of the upper surface of the housing essentially perpendicular to said direction of introduction, projecting from said general plane of said upper surface.

6. A device according to claim 2, characterized in that its portable part (120) comprises said coupler (121) for a microprocessor card and the associated introduction slot (121a), said keyboard (122), a display means (123), an emission means (124) for informations in the form of acoustic or electromagnetic signals, and a rechargeable accumulator (125), and in that its fixed part (110,130) comprises means for processing, validating and storing transactions, means for printing transaction tickets and means (132) for receiving informations in the form of acoustic or electromagnetic signals emitted by said portable part.

7. A device according to claim 2 or 6, characterized in that it comprises a plurality of portable parts (120) and in that each portable part comprises means for emitting towards the fixed part (110), with said emission means, an identifier of said portable part.

8. A device according to claim 6 or 7, characterized in that the fixed part (110) comprises also a mean (132) for emitting informations in the form of acoustic or electromagnetic signals, in that the or each portable part (120) comprises also a means (124) for receiving said informations emitted by the fixed part, and in that the fixed part comprises means for emitting towards the or one of the portable parts, an information relating to the validation of the transaction.

9. A device according to one of claims 6 to 8, characterized in that said signals are infrared rays.

10. A device according to claim 2, characterized in that the or each portable part (120) comprises a rechargeable accumulator (125) and a means (124) for emitting informations in the form of acoustic or electromagnetic signals, and in that the fixed part comprises an auxiliary unit (130) connected to it by a cable (115) and comprising at least one receptacle (131) for a portable part in order to recharge its accumulator and a means (132) for receiving informations in the form of electromagnetic or acoustic signals.

11. A device according to claim 10, characterized in that said auxiliary unit (130) comprises a plurality of receptacles (131) for a plurality of portable parts.

12. A device according to claim 11, characterized in that said auxiliary unit comprises a central base (135) housing said means for receiving informations in the form of electromagnetic or acoustic signals and defining a plurality of side faces, and in a lower area of each side face, a hinged flat (136) able to be open to define between it and said side face, a receptacle (131) for the recharge of one portable part.

13. A process for carrying out a transaction with a device according to claim 6, comprising the following steps :
(a) an operator introduces the microprocessor card (CAM) of a card holder in the coupler (121) of the portable part (120),
(b) the operator enters the amount of the transaction on the keyboard (122) of the portable part,
(c) the portable part reads in the microprocessor card (CAM) an identifier and a confidential code peculiar to said card,
(d) the holder enters a confidential code on the keyboard (122) of the portable part,
(e) the microprocessor card (CAM) checks the entered confidential code and the result of said check is displayed on the display means (123) ;
(f) if the check succeeds favourably, the operator takes off the card from said coupler (121) and returns it to the holder,
(g) the operator brings the portable part (120) closer to the fixed part (110,130),
(h) the portable part transmits to the fixed part by the emission and reception means, informations representative of the entered transaction amount and at least of the identifier of the microprocessor,
(i) the fixed part stores the transaction and print a transaction ticket.

14. A process according to claim 13, characterized in that it also comprises, before step (f), the step consisting in calculating a check sum in the microprocessor card (CAM) from a random number provided by the processing means (126) of the portable part, and in that the step (h) comprises also the transmission of said check sum to the fixed part (110,130), in order to store it and/or to print it on the transaction ticket.

15. A process according to claim 13 or 14, carried out with a device comprising a plurality of portable parts (120), characterized in that step (h) comprises further the transmission to the fixed part (110,130) of an identifier of the emitting portable part.
